Europäisches Patentamt

European Patent Office

Office européen des brevets

(19)

(11) Veröffentlichungsnummer: **0 324 083 B1**

## (12) EUROPÄISCHE PATENTSCHRIFT

(45) Veröffentlichungstag der Patentschrift:
17.04.91 Patentblatt 91/16

(51) Int. Cl.⁵: **B64F 1/32,** B60T 7/16,
B62D 1/24, B60P 3/00

(21) Anmeldenummer: 88119490.6

(22) Anmeldetag: 23.11.88

(54) Versorgungsfahrzeug, inbesondere für Flugzeuge.

(30) Priorität: 11.01.88 DE 3800509

(43) Veröffentlichungstag der Anmeldung:
19.07.89 Patentblatt 89/29

(45) Bekanntmachung des Hinweises auf die
Patenterteilung:
17.04.91 Patentblatt 91/16

(84) Benannte Vertragsstaaten:
CH DE FR GB IT LI

(56) Entgegenhaltungen:
DE-A- 2 735 290
US-A- 2 412 158
US-A- 3 103 291
US-A- 3 154 166
US-A- 3 341 042

(73) Patentinhaber: FFG
FAHRZEUGWERKSTÄTTEN FALKENRIED
GMBH
Falkenried 7-19
W-2000 Hamburg 20 (DE)

(72) Erfinder: Feutlinske, Hilmar
Wentzelstrasse 20a
W-2000 Hamburg 60 (DE)

(74) Vertreter: Glawe, Delfs, Moll & Partner
Patentanwälte
Liebherrstrasse 20
W-8000 München 26 (DE)

## Beschreibung

Die Erfindung betrifft ein Versorgungsfahrzeug, insbesondere für Flugzeuge, mit einem ein Fahrgestell und einen vorne angeordneten Fahrerstand umfassenden Trägerfahrzeug und einem einen Koffer, eine Hubeinrichtung und eine am Fahrzeugheck angeordnete Übergabeeinrichtung umfassenden Lastteil.

Es ist Flugzeugversorgungsfahrzeugen mit serienmäßigen Trägerfahrzeugen mit vorne in einem Fahrerhaus angeordneten Fahrerstand (US-A 3 103 291) nicht gestattet, rückwärts an ein Flugzeug heranzufahren. Daher ist man gezwungen, die Übergabeeinrichtung an der vorderer Stirnseite des die Ladung aufnehmenden Koffers anzuordnen (US-A 2 412 158). Dies ist aufwendig, weil sich die Übergabeeinrichtung über das Fahrerhaus hinwegstrecken muß und daher eine große Reichweite besitzen muß. Auch sind besondere konstruktive Vorkehrungen erforderlich, die es ermöglichen, die Übergabeeinrichtung im Fahrbetrieb bei abgesenktem Koffer oberhalb des Fahrerhauses unterzubringen. Dies erfordert im allgemeinen niedrige Spezialanfertigungen des Fahrerhauses. Zum Beladen des Koffers an der Rampe ist eine vorne gelegene Übergabeeinrichtung nicht geeignet, weil sie nur bei angehobenem Koffer mit diesem flurgleich sein kann. Zusätzlich ist daher an der hinteren Stirnseite noch eine Ladeöffnung vorzusehen.

Der Erfindung liegt die Aufgabe zugrunde, ein Versorgungsfahrzeug der eingangs genannten Art zu schaffen, das weniger aufwendig ist.

Die erfindungsgemäße Lösung besteht darin, daß zusätzlich zum Fahrerstand eine Fahrzeugfernsteuereinrichtung vorgesehen ist, die einerseits manuell bedienbar ist und zum Manövrieren des Fahrzeugs an das Flugzeug ein vom Fahrzeug lösbares oder am Heck des Fahrzeugs angeordnetes Bedienteil aufweist, und andererseits mittels einer mittels Steuerautomatik unter Einschluß eines ortsfesten Weg- und/oder Zielgebers betätigbar ist.

Das Fahrzeug kann in direkter Steuerung vom Fahrerhaus aus in eine nahe, aber noch sichere Distanz wahrende Stellung zu der vorgesehenen Übergabestellung gefahren werden. Nach Umstellung auf Fernsteuerung kann der Fahrer von einem Platz mit gutem rückseitigen Überblick mittels der Fernsteuereinrichtung das Fahrzeug rückwärts exakt in die gewünschte Stellung rangieren. Der Stand der Technik stellt ausgereifte Fernsteuereinrichtungen zur Verfügung, die den technischen Vorgang risikolos durchzuführen gestatten. Während dies die Betätigungsart ist, die man für individuelle Manöver wählt und insbesondere zum Heranfahren des Fahrzeugs an ein Flugzeug, ermöglicht die beispielsweise in Kombination mit einem in der Fahrbahn integrierten Leitkabelsystem (DE-A 27 35 290) die problemlose Durchführung von stets gleichen Manövervorgängen, insbesondere die Rückwärtsfahrt gegen eine Laderampe oder zum Ab- oder Aufsatteln eines abgestellten Wechselkoffers. Die Ausrüstung des erfindungsgemäßen Versorgungsfahrzeugs mit einer solchen wahlweise manuell oder automatisch zu betätigenden Steuereinrichtung führt zu einem besonders wirtschaftlichen Catering-Betrieb. Die automatische Spurführung vereinfacht insbesondere das Auf- und Absatteln eines Wechselkoffers und ermöglicht daher ein Catering-System, das häufiger als bisher denkbar die Trennung des Koffers vom Trägerfahrzeug vorsieht. Beispielsweise können die Koffer rasch an einer flugfeldfernen Küche beladen werden, wobei sie ggf. an der Rampe vom Trägerfahrzeug getrennt sein können. Sie werden dann auf dem Flugplatz ohne Trägerfahrzeug bereitgestellt, um für den Einsatz – insbesondere in Stoßzeiten – rechtzeitig zur Verfügung zu stehen. Bei Bedarf werden sie mit einem Trägerfahrzeug verbunden, um an das zu versorgende Flugzeug herangefahren werden zu können. An der Küchenrampe und am Bereitstellungsplatz am Flugplatz können Leitkabelsysteme die rasche Rangierbarkeit der Trägerfahrzeuge sicherstellen, während das Fahrzeug auf dem Flugfeld mittels der manuell bedienbaren Fernsteuerung rückwärts an das Flugzeug herangesteuert werden kann. Hingegen mußte bislang die Küche oder eine sonstige Beladezentrale am Flugplatz vorgesehen sein, um u.a. wegen der Kostspieligkeit der Versorgungsfahrzeuge eine direkte Verbindung zwischen Küche und Flugzeug mittels weniger Versorgungsfahrzeuge zu ermöglichen. Für den Küchenbetrieb kann aber aus verschiedenen Gründen eine flugplatzferne Lage erwünschter sein. Diese wird erfindungsgemäß dadurch ermöglicht, daß dank der Kombination von kostengünstiger Einfachheit der Fahrzeugkomponenten, dank ihrer Trennbarkeit und dank ihrer leichten Rückwärtsrangierbarkeit, ein kostengünstiges Transportsystem wirtschaftlich zur Verfügung gestellt werden kann.

Die Übergabeeinrichtung ist zweckmäßigerweise - wie an sich bekannt - ganz oder teilweise aus ihrer Übergabeposition zum Koffer zurückziebar, um die Gesamtabmessung des Fahrzeugs im Fahrbetrieb zu verringern. Beispielsweise kann sie in den Koffer hineinziehbar oder an diesen anklappbar sein.

Ferner ist es vorteilhaft, wenn sie aus einer mit dem Koffer flurgleichen Höhe auf eine höhere Übergabehöhe anhebbar ist. Dies gestattet es, die Hubeinrichtung auf eine Übergabehöhe einzurichten, die der großen Mehrheit der Bedarfsfälle gerecht wird, während die wenigen Fälle mit ungewöhnlich hoher Übergabehöhe oder mit einer zweiten Übergabeebene oberhalb der normalen Höhe durch die Anhebbarkeit der Übergabeeinrichtung bedient werden können. Entsprechend kann die Übergabeeinrichtung auch auf den Boden absenkbar sein zwecks Beladung von Fahrbahnniveau aus.

Die Erfindung wird im folgenden anhand der Zeichnungen erläutert, die ein vorteilhaftes Ausführungsbeispiels veranschaulicht. Darin zeigen :

Fig. 1 bis 7 Seitenansichten des Fahrzeugs im Fahrzustand bei Beladung von an der Rampe bzw. von Fahrbahnniveau, bei der Entladung am Flugzeug in Normalhöhe bzw. in Überhöhe und schließlich mit auf dem Boden abgestützten Absetzkoffer bzw. das Fahrzeug ohne Koffer,

Fig. 8 eine Draufsicht des Fahrzeugs am Flugzeug und

Fig. 9 eine Draufsicht auf den Beladezustand an der Rampe

Das Fahrzeug besteht aus dem Trägerfahrzeug 1 mit Fahrerstand 2 im Fahrerhaus 3 und Fahrgestell 4 sowie dem Lastteil mit Koffer 5, Hubeinrichtung 6 und Übergabeeinrichtung 7.

Der Begriff Koffer bedeutet keine Beschränkung auf eine bestimmte Bauart des Lastaufnahmeelements, obgleich für Catering-Zwecke im allgemeinen eine geschlossene Bauart gewählt wird.

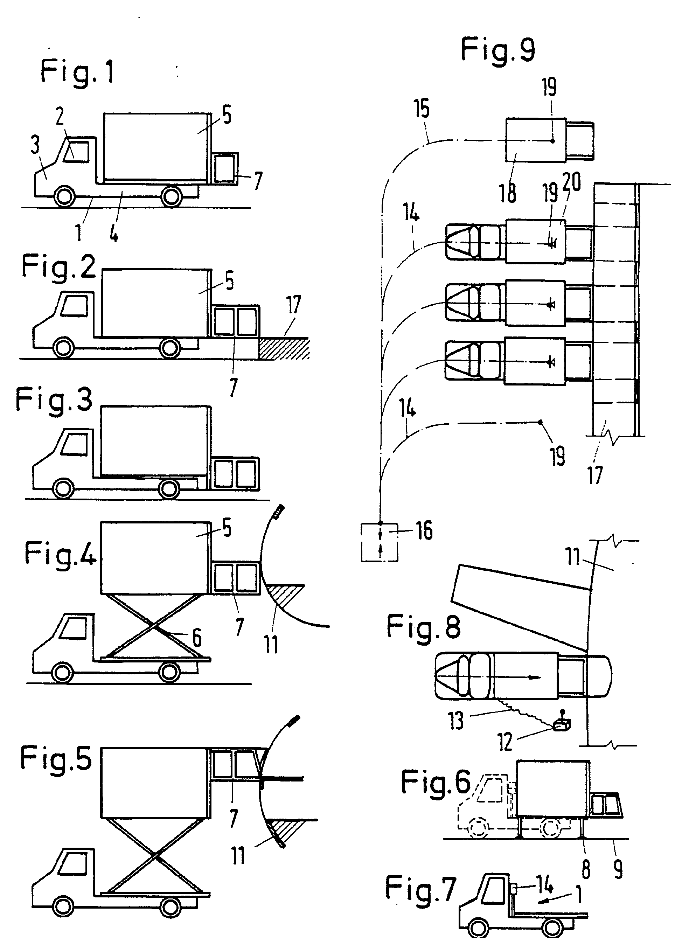

Der Koffer ist gemäß Fig. 6 als Absetzkoffer ausgeführt, d.h. er weist Stützen 8 auf, die unabhängig vom Trägerfahrzeug 1 auf den Boden 9 aufgesetzt werden können und daher die Trennung des Koffers vom Trägerfahrzeug erlauben, wie Fig. 6 und 7 dies veranschaulichen.

Die Überladebrücke 7 kann gemäß Fig. 1 ganz oder teilweise in den Koffer 5 eingeschoben werden. Fig. 2 und 3 zeigen sie in typischen Beladesituationen, nämlich zum einen flurgleich mit dem Koffer an der Rampe 17 und zum anderen abgesenkt zum Beladen von Fahrbahnniveau. Zum Entladen am Flugzeug wird der Koffer 5 mittels der Hubeinrichtung 6 auf die Höhe der Aufnahmefläche des Flugzeugs 11 angehoben, wobei die Überladebrücke mit dieser Fläche und dem Kofferflur höhengleich ist (Fig. 4). Bei Überhöhe kann gemäß Fig. 5 die Last mit der Übergabebrücke über die Flurhöhe des Koffers angehoben werden. Diese Vielfalt von Benutzungsmöglichkeiten bei einfacher Bauart der Übergabebrücke ist nur bei deren rückseitiger Anordnung denkbar.

Ermöglicht wird diese Anordnung durch die Rückwärtsrangierbarkeit des Flugzeugs mittels der manuellen Fernsteuereinrichtung 12, die über Kabel 13 frei gegenüber dem Fahrzeug bewegbar ist. Am Fahrzeug ist – angedeutet in Fig. 7 – bei 14 eine Halterung dafür während des normalen Fahrbetriebs vorgesehen.

Ein wesentlich rascheres Rückwärtsrangieren ohne manuelle Fernsteuereinrichtung ermöglicht eine Steuerautomatik mit ortsfester Weg- oder Zielvorgabe. Die Wegvorgabe kann gemäß Fig. 9 beispielsweise mittels Leitkabeln 14, 15 in der Fahrbahn erfolgen, die ausgehend von einer Anfangsstellung mit Zuordnungsschaltungen 16, die dem zu rangierenden Fahrzeug ein bestimmtes Leitkabel entsprechend dem gewünschten Ziel zuordnet, an die Rampe 17 oder zu Abstellplätzen 18 führen. Sie sind mit einem geeigneten Organ 19 zur Übermittlung eines Endstellungssignals an den Sensor 20 des Fahrzeugs versehen, so daß nicht nur der Weg, sondern auch die Endstellung automatisch richtig gefunden werden. Es ist bekannt, daß man derartige Steuerungen so genau ausführen kann, daß die Fahrzeuge rasch und zuverlässig die gewünschten Stellungen erreichen. Die Genauigkeit reicht auch dazu aus, die Fahrzeugteile in korrekte Stellung zwecks Verbindung unter einen abgestellten Koffer zu steuern.

Die automatische Leitkabel-Steuerung kann durch andere automatische oder halbautomatische Steuerungsarten ersetzt werden, bei denen statt eines Weggebers ein Zielgeber vorgesehen ist, wobei der Weg mittels eines im Fahrzeug oder ortsfest vorgesehenen Rechners aus der jeweiligen Relativstellung des Fahrzeugs zum Zielgeber errechnet und eingestellt wird. Die Charakterisierung dieses Gebers als ortsfest soll lediglich seinen Zustand während des Steuervorgangs bezeichnen, um dem Fahrzeug während dieses Vorgangs die notwendigen, zielbezogenen Signale erteilen zu können. Dies ist auch dann möglich, wenn der Zielgeber jeweils nur für den einzelnen Rangiervorgang installiert wird. Es kann sich daher um ein transportables Gerät (beispielsweise einen Retrospiegel zum Zurücksenden von vom Fahrzeug ausgehenden optischen Signalen) handeln, das auf dem Fahrzeug mitgeführt wird und im gewünschten Falle am Rangierziel in derjenigen Richtung aufgestellt wird, die das Fahrzeug beim Erreichen des Ziels einnehmen soll. Mit einem solchen Mittel ist auch das automatische Rückwärtsrangieren am Flugzeug möglich, wobei die Ladeöffnung des Flugzeugs 11 mit dem Zielgeber ausgerüstet sein kann.

Der Koffer mit der Übergabeeinrichtung kann wesentlich preisgünstiger hergestellt werden, als dies bei den bekannten der Fall ist, weil nicht über das Fahrerhaus hinweggeladen zu werden braucht und weil keine zusätzlichen Ladeöffnungen vorgesehen werden muß. Die Übergabebrücke kann zum Beladen und Entladen universeller verwendet werden. Auch beim Trägerfahrzeug können wesentliche Einsparungen erzielt werden, weil nicht die sonst notwendigen, abgesenkten oder abgeflachten Fahrerhäuser verwendet zu werden brauchen. Ohne Rücksicht auf die Lage der Ladezentrale können die Koffer flugfeldnah für Stoßzeiten bereitgestellt werden. Die Anzahl der Trägerfahrzeuge kann verringert werden. Bei Reparatur und Wartung kann der nicht betroffene Teil weiter im Einsatz bleiben.

## Ansprüche

1. Versorgungsfahrzeug, insbesondere für Flugzeuge, mit einem ein Fahrgestell (4) und einen vorne angeordneten Fahrerstand (2) umfassenden Trägerfahrzeug (1) und einem einen Koffer (5), eine Hubeinrichtung (6) und eine am Fahrzeugheck angeordnete Übergabeeinrichtung (7) umfassenden Lastteil, dadurch gekennzeichnet, daß zusätzlich zum Fahrerstand (2) eine Fahrzeug-Fernsteuereinrichtung (12 ; 14 bis 20) vorgesehen ist, die einerseits manuell bedienbar ist und zum Manövrieren des Fahrzeugs an das Flugzeug ein vom Fahrzeug lösbares oder am Heck des Fahrzeugs angeordnetes Bedienteil (12) aufweist, und andererseits mittels einer Steuerautomatik unter Einschluß eines ortsfesten Weg- und/oder Zielgebers (14, 15, 19) betätigbar ist.

2. Fahrzeug nach Anspruch 1, dadurch gekennzeichnet, daß der Lastteil (5) vom Trägerfahrzeug (1) trennbar ist.

3. Fahrzeug nach Anspruch 1 oder 2, dadurch gekennzeichnet, daß die Übergadeeinrichtung (7) aus ihrer Übergabeposition ganz oder teilweise zum Koffer zurückziehbar ist.

4. Fahrzeug nach einem der Ansprüche 1 bis 3, dadurch gekennzeichnet daß die Übergabeeinrichtung (7) aus einer mit dem Koffer (5) flurgleichen Höhe auf eine höhere Übergabehöhe anhebbar ist.

## Claims

1. Supply vehicle, in particular for aircraft, having a carrier vehicle (1) comprising a chassis (4) and a driver's position (2) disposed at the front, and a load part comprising a container (5), a lifting device (6) and a transfer device (7) disposed at the vehicle tail, characterised in that in addition to the driver's position (2) a vehicle remote control device (12 ; 14 to 20) is provided, which device, on the one hand, can be operated manually and, for manoeuvring the vehicle up to the aircraft, has a control part (12) which is detachable from the vehicle or is disposed on the tail of the vehicle and, on the other hand, can be operated by means of an automatic control system by including a stationary route and/or destination transmitter (14, 15, 19).

2. Vehicle according to Claim 1, characterised in that the load part (5) can be separated from the carrier vehicle (1).

3. Vehicle according to Claim 1 or 2, characterised in that the transfer device (7) can be retracted from its transfer position fully or partially to the container.

4. Vehicle according to any of Claims 1 to 3, characterised in that the transfer device (7) can be raised from a position at the same level as the floor of the container (5) to a higher transfer level.

## Revendications

1. Véhicule de ravitaillement, particulièrement adapté aux avions, composé d'une partie portante comprenant un châssis et un poste de conduite à l'avant et d'une partie portéé destinée à la charge, relevant d'un coffre, d'un dispositif élévateur et d'un dispositif de distribution placé à l'arrière du véhicule. Cette deuxième partie est caractérisée par le fait qu'elle est équipée d'une télécommande du véhicule, en supplément au poste de conduite. Celle-ci est utilisable d'une part manuellement, et disposant d'un module indépendant ou placé derrière le véhicule, elle permet la maneuvre de ce dernier près d'un avion. D'autre part, reliée à un donneur sédentaire de directions et/ou d'ordres, elle peut être actionnée par le biais d'un pilotage automatique.

2. Véhicule de référence 1, signalisé par le fait que la partie portante est dissociable de la partie portée.

3. Véhicule de référence 1 ou 2, signalisé par le fait que le dispositif de distribution peut être retiré en partie ou complètement de sa position sur le coffre.

4. Véhicule de référence 1, 2 ou 3, signalisé par le fait que le dispositif de ravitaillement et le coffre peuvent être élevés simultanément et sur un même plan.

Fig.1

Fig.2

Fig.3

Fig.4

Fig.5

Fig.9

Fig.8

Fig.6

Fig.7